# EUROPEAN PATENT SPECIFICATION

(11) **EP 4 431 764 B1**
(45) Date of publication and mention of the grant of the patent: **17.09.2025**
(21) Application number: 24164300.6
(22) Date of filing: 18.03.2024
(51) Int. Cl.: F16H 57/04, F16H 57/027

(54) **WORK VEHICLE**
ARBEITSFAHRZEUG
VÉHICULE DE TRAVAIL

(30) Priority: 16.03.2023 IT 202300005004
(43) Date of publication of application: 18.09.2024
(73) Proprietor: CNH Industrial Italia S.p.A., 10156 Torino (IT)
(72) Inventor: LUCENTE, Aldo, 10156 Turin (IT); TERZI, Stefano, 10156 Turin (IT)
(74) Representative: CNH Industrial IP Department

(56) References cited:
- EP-A1- 4 067 145
- WO-A2-2012/109223
- DE-A1- 102015 223 566
- DE-A1- 102018 211 360
- JP-A- 2003 166 630
- JP-A- S60 121 324

## Description

### TECHNICAL FIELD

The present invention concerns a work vehicle comprising a driveline assembly.

### BACKGROUND OF THE INVENTION

Work vehicles are known comprising a main body, a locomotion system including wheels or tracks for moving the main body with respect to the ground, a propulsion system including a thermal engine and/or an electric motor, and a driveline, which operatively connects the locomotion system to the propulsion system.

In general, the drivelines comprise a plurality of mechanical components (e.g., gears and bearings), which are lubricated to reduce friction and wear between their contact surfaces as shown for example in DE102015223566A1. For this purpose, known work vehicles comprise an oil sump, which contains oil and a pump adapted to suck oil from the oil sump and to sprinkle it onto contact surfaces of the mechanical components. The oil sump is also adapted to collect the oil that falls due to gravity after lubricating the mechanical components.

At the same time the drivelines may be lubricated by oil splashing, i.e., by splashing caused by the movement of the mechanical components. For this purpose, the mechanical components of the drivelines are partially immersed in the oil sump.

However, such lubrication methods are not optimal under all vehicle operating conditions.

As known, when the work vehicle is positioned on a flat road, the free surface of the oil in the oil sump is substantially parallel to the ground. When the work vehicle is positioned on an inclined road, the oil redistributes because of gravity. In detail, the free surface of the oil is still substantially parallel to the ground, but the oil accumulates on a portion of the oil sump oriented towards a downmost part of the inclined road.

In this condition, the suction of the oil by means of the pump may be problematic and the lubrication of the driveline could be negatively affected. In fact, the oil accumulated in the downmost portion of the oil sump may not be fluidly connected with an inlet of the pump and, therefore, may not be sucked. In detail, the oil may be positioned below the inlet of the pump with respect to a vertical axis of the vehicle.

In order to ensure a correct suction of the oil, it might be desirable to increase the amount of oil in the oil sump. In fact, an oil sump containing a greater amount of oil would minimize the risk of the pump not being capable of sucking the oil. However, the capacity of oil of the drivelines is limited by the fact that as the amount of oil increases, the power losses increase, as a consequence of the fact that the oil level in the oil sump rises and the portion of the mechanical components immersed in the oil increases.

Therefore, there is a need within the industry for a driveline assembly for a work vehicle allowing the quality of lubrication of the mechanical components of the driveline to be efficiently ensured even when the work vehicle is positioned on an inclined road.

### SUMMARY OF THE INVENTION

The aforementioned aim is reached by a work vehicle, as claimed in the appended independent claim.

Preferred embodiments of the invention are realized according to the claims dependent or related to the above independent claim.

### BRIEF DESCRIPTION OF DRAWINGS

For a better understanding of the present invention, one preferred embodiment is described in the following, by way of a non-limiting example, with reference to the attached drawings wherein:
- Figure 1 is a schematic representation of a work vehicle comprising a driveline assembly according to the present invention; and
- Figures 2A, 2B and 2C are lateral and schematic views of the driveline assembly of Figure 1 in three respective different operating conditions and with parts removed for clarity.

### DETAILED DESCRIPTION OF THE INVENTION

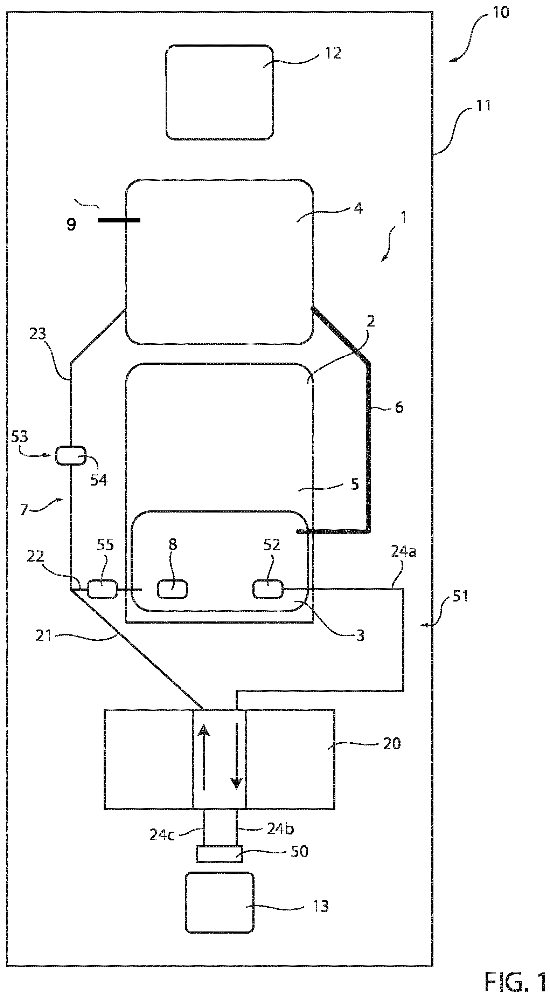

With reference to figure 1, numeral 10 indicates a work vehicle, in particular an agricultural vehicle such as a tractor.

Work vehicle 10 comprises a main body 11, a plurality of wheels 12, which are rotatable relative to main body 11 about respective rotational axes and motor means 13 (e.g., a thermal engine and/or an electric motor) adapted to rotate wheels 12 about their respective rotational axes.

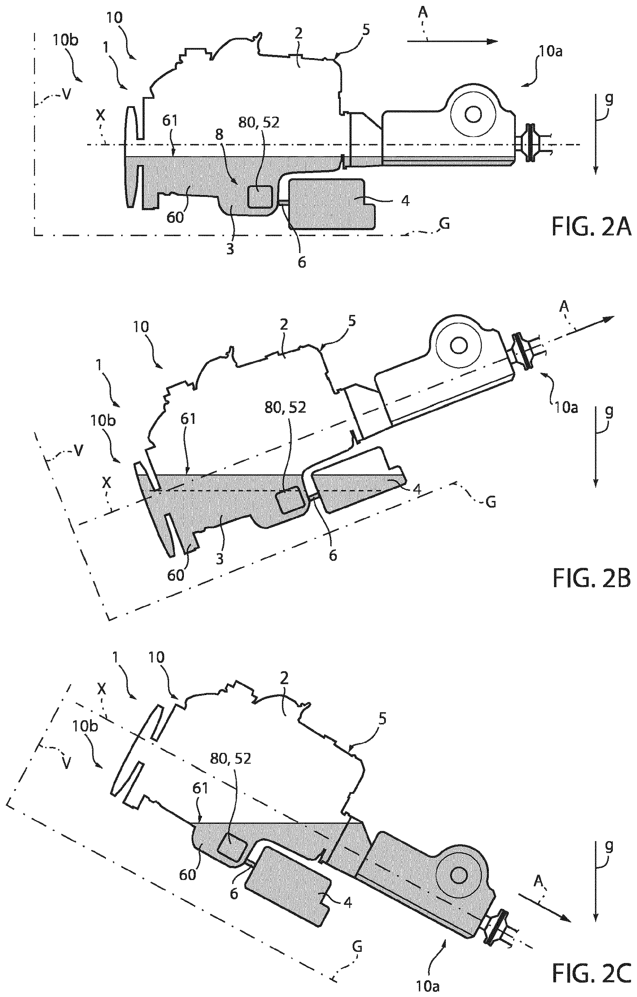

Work vehicle 10 defines a longitudinal direction X, a front portion 10a and a rear portion 10b according to longitudinal direction X. In detail, front portion 10a and rear portion 10b are opposite to each other according to longitudinal direction X. In addition, a forward advancement direction A of work vehicle 10 is oriented from rear portion 10b towards front portion 10a (Figures 2A, 2B and 2C).

Work vehicle 10 further comprises a driveline assembly 1. Driveline assembly 1 comprises, in turn, a driveline 2 adapted to operatively connect motor means 13 to wheels 12 and an oil sump 3 for collecting by gravity an oil 60 adapted to lubricate driveline 2.

Driveline 2 comprises a plurality of mechanical components - which are known per se and not shown - adapted to transmit motion from motor means 13 to wheels 12. By way of example, driveline 2 comprises a plurality of wheels and bearings. Preferably, at least some of the mechanical components are at least partially immersed in oil 60 contained in oil sump 3.

Drivelines assembly 1 also comprises a pumping system 8, which is adapted to suck oil 60 from oil sump 3 and to direct it to the mechanical components of driveline 2 to be lubricated. In the embodiment shown, pumping system 8 comprises a pump 80, which is arranged within oil sump 3 (Figures 2A, 2B and 2C).

Driveline assembly 1 also comprises a container 5 enclosing at least in part driveline 2. In addition, container 5 comprises oil sump 3 or is defined at least in part by oil sump 3. Preferably but not necessarily, oil sump 3 constitutes the lowermost portion of container 5 according to a direction V vertical to the ground on which wheels 12 rest, i.e., the portion of container 5 closest to the ground. In particular, Figures 2A, 2B and 2C show a plane G tangent to the ground on which wheels 12 rest and direction V is perpendicular to plane G.

Advantageously, driveline assembly 1 comprises an oil reservoir 4 adapted to contain oil 60, fluidly connected to oil sump 3 and arranged at least in part below oil sump 3 according to direction V. In particular, oil reservoir 4 is adapted to contain the same oil contained in oil sump 3.

In other words, oil reservoir 4 is closer to the ground on which wheels 12 rest than oil sump 3. In addition, oil reservoir 4 is arranged at least in part below driveline 2 according to direction V.

Oil reservoir 4 is arranged externally to container 5. Therefore, the mechanical components of driveline 2 are not immersed in oil 60 contained in oil reservoir 4.

More in detail, oil reservoir 4 is at least partially interposed between oil sump 3 and front portion 10a along longitudinal direction X. In the embodiment shown, oil reservoir 4 is completely interposed between oil sump 3 and front portion 10a along longitudinal direction X.

Furthermore, as schematized in Figure 1, oil reservoir 4 comprises a vent 9 for the purpose of releasing any aeriform substances contained within oil reservoir 4 (by way of example, air or oil vapors) to the outside of driveline assembly 1.

In detail, driveline assembly 1 comprises a duct 6 fluidly connecting oil sump 3 to oil reservoir 4. Accordingly, oil 60 contained in oil sump 3 is adapted flow to oil reservoir 4 through duct 6 due to gravity.

Figures 2A, 2B and 2C show driveline assembly 1 respectively in a flat condition, an uphill condition and a downhill condition. In particular, driveline assembly 1 is in the flat condition when work vehicle 1 is on a flat road, i.e., a road perpendicular or substantially perpendicular to acceleration vector g; driveline assembly 1 is in the uphill condition or the downhill condition respectively when work vehicle 1 is on a uphill road or a downhill road.

In the three conditions shown in Figures 2A, 2B and 2C, a free surface 61 of oil 60 in oil sump 3 is directed perpendicularly to acceleration vector g. Specifically, the acceleration vector g to be considered is the one acting on driveline assembly 1 or work vehicle 10. For example, the acceleration vector g is applied in the center of mass of work vehicle 10.

When driveline assembly 1 is in the flat condition, free surface 61 of oil 60 in oil sump 3 is perpendicular to vector g and parallel to plane G (Figure 2A); when driveline assembly 1 is in the uphill condition or the downhill condition, free surface 61 of oil 60 in oil sump 3 is still perpendicular to vector g and angled with respect to plane G (Figures 2B and 2C). In addition, considering free surface 61, Figures 2A, 2B, 2C show that pump 80 is completely immersed in oil 60 in the flat condition, the uphill condition and the downhill condition.

In the embodiment shown, when driveline assembly 1 is in the flat condition or the downhill condition, oil reservoir 4 is completely full; when driveline assembly 1 is in the uphill condition, oil 60 from oil reservoir 4 is adapted to flow to oil sump 3 because of gravity.

Figure 2B further shows a dashed line, which represents the free surface of oil 60 in a theoretical condition, in which driveline assembly does not comprise oil reservoir 4. In further detail, as schematized in Figure 2B, the level of oil in the theoretical condition is lower than free surface 61 according to the invention and pump 80 is arranged in part above the dashed line.

Preferably, the total amount of oil 60 contained in driveline assembly 1 is such that the oil level in oil sump 3 when driveline assembly 1 is in the flat condition is the same as in the theoretical condition, in which the driveline assembly 1 does not include oil reservoir 4.

Work vehicle 1 further comprises at least one implement 50, which is hydraulically operated and an actuation circuit 51 for the actuation of implement 50. By way of example, implement 50 is a front end loader.

The actuation circuit 51 comprises, in turn, a pump 52 adapted to suck oil from oil sump 3, a remote valve 20 fluidly connected to pump 52, the implement 50 fluidly connected to remote valve 20 and a duct 7 fluidly connecting remote valve 20 to driveline assembly 1 (Figure 1).

Pump 52 is adapted to deliver the oil sucked from oil sump 3 to remote valve 20. Moreover, as schematically shown in Figure 2, pump 52 is arranged within oil sump 3.

As schematized in Figure 1, actuation circuit 51 further comprises in succession a stretch 24a fluidly connecting pump 52 to remote valve 20, a stretch 24b fluidly connecting remote valve 20 to implement 50 and a stretch 24c fluidly connecting implement 50 to remote valve 20.

Duct 7 comprises a stretch 21 extending from remote valve 20, a stretch 22 fluidly connecting stretch 21 to oil sump 3 and a stretch 23 fluidly connecting stretch 21 to oil reservoir 4. In detail, stretches 21, 22 and 23 are jointed with one another by a T-connection or a three-way fitting.

Moreover, considering free surface 61, Figures 2A, 2B, 2C show that pump 52 is completely immersed in oil 60 in the flat condition, the uphill condition and the downhill condition.

According to the invention, driveline assembly 1 comprises valve means adapted to selectively control the flow of oil between stretch 21 and oil sump 3 and/or between stretch 21 and oil reservoir 4. In particular, the valve means are arranged at duct 7 and comprise a hydraulically actuated valve or an electro-hydraulically actuated valve.

In detail, the valve means are adapted to control the flow of oil such that the flow rate of oil flowing between stretch 21 and oil reservoir 4 is greater than the flow rate of oil flowing between stretch 21 and oil sump 3. In further detail, the valve means may be adapted to completely deny the fluidic communication between stretch 21 and oil sump 3 and allow the fluidic communication between stretch 21 and oil reservoir 4.

Furthermore, the extension of the cross section of duct 6 is greater than the extension of the cross section of duct 7. In detail, cross section shall mean the section of the duct 6, 7 perpendicular to the longitudinal direction of the same duct 6, 7.

Preferably, actuation circuit 51 comprises deaeration means 53 adapted to remove oxygen and other dissolved gases from the oil flowing through it. In detail, actuation circuit 51 comprises a deaerator 54 at stretch 22 and/or a deaerator 55 at stretch 23.

The operation of driveline assembly 1 and work vehicle 10 according to the present invention is described in the following.

In use, oil 60 of driveline assembly 1 is contained in part in oil sump 3 and in part in oil reservoir 4.

During operation, driveline 2 transmits motion from motor means 13 to wheels 12 and the mechanical components of driveline 2 are lubricated by oil splashing and pumping system 8. In particular, at least some of the mechanical components of driveline 2 are partially immersed in oil 60 contained in oil sump 3 and lubricate the contact surfaces thereof by virtue of their movements.

At the same time, pumping system 8 sucks oil 60 from oil sump 3 and sprays it towards the mechanical components of driveline 2.

After lubricating the surfaces of mechanical components, the oil falls by gravity and is collected by oil sump 3. In addition, in the flat condition and the downhill condition, the oil flows from oil sump 3 to oil reservoir 4 through duct 6 due to gravity.

At the same time, pump 52 sucks oil 60 from oil sump 3 and delivers it to remote valve 20. Remote valve 20, in turn, delivers the sucked oil to implement 50. In detail, oil flows from pump 52 to remote valve 20 through stretch 24a and from remote valve 20 to implement 50 through stretch 24b.

After actuating implement 50, the oil flows back to remote valve 20 through stretch 24c and then towards oil sump 3 through stretch 22 and oil reservoir 4 through stretch 23.

In detail, since driveline assembly 1 comprises oil reservoir 4, pumps 52 and 80 are completely immersed in oil in the flat condition (Figure 2A), the uphill condition (Figure 2B) and the downhill condition (Figure 2C). In further detail, when driveline assembly 1 is in the uphill condition, oil 60 flows from oil reservoir 4 to oil sump 3 through duct 6 because of gravity and thus ensures that the inlets of both pumps 52 and 80 are completely immersed in lubricating oil 60.

In the not-shown embodiment comprising the valve means, valve means control the flow of oil flowing between stretch 21 and oil sump 3 and/or between stretch 21 and oil reservoir 4.

In view of the foregoing, the advantages of driveline assembly 1 and work vehicle 10 according to the invention are apparent.

In detail, since driveline assembly 1 comprises oil reservoir 4, which is connected to oil sump 3 and arranged below oil sump 3, the oil capacity of driveline assembly 1 is increased and the lubrication quality of the mechanical components of driveline 2 is increased, especially when work vehicle is positioned on an inclined road. In addition, the total oil capacity of driveline assembly 1 is increased without causing an increase in power losses, because the oil capacity of oil sump 3 needs not be increased with respect to the oil sumps of the known work vehicles.

Since oil reservoir 4 comprises vent 9, oil 60 can flow between oil sump 3 and oil reservoir 4 by gravity without the risk of obstruction due to any aeriform substances inside oil reservoir 4.

Since driveline assembly 1 comprises duct 7, which fluidly connects remote valve 20 to oil sump 3 and oil reservoir 4, the oil flow from remote valve 20 is split between oil sump 3 and oil reservoir 4. This allows the velocity of the flow coming from remote valve 20 and directed to oil sump 3 to be reduced. As a result, turbulence and aeration of oil 60 is limited. In particular, oil reservoir 4 allows oil 60 to stagnate and to be deaerated. This effect can be enhanced by causing the oil flow rate directed to oil reservoir 4 to be much greater than the oil flow rate directed to oil sump 3.

In addition, since the extension of the cross section of duct 6 is greater than the extension of the cross section of duct 7, the velocity of oil 60 flowing between oil reservoir 4 and oil sump 3 through duct 6 is significantly reduced. This allows turbulence and aeration of oil 60 to be further limited.

It is clear that modifications can be made to driveline assembly 1 and work vehicle 10 which do not extend beyond the scope of protection defined by the claims.

In particular, work vehicle 10 might comprise tracks instead of wheels 12.

Work vehicle 10 might comprise more than one implement 50 and more than one actuation circuits 51.

## Claims

1. Work vehicle (10) comprising:
- a main body (11);
- locomotion means (12) adapted to move said main body (11) with respect to a reference system;
- motor means (13) adapted to drive said locomotion means (12); and
- a driveline assembly (1)
said driveline assembly (1) comprising:
- a driveline (2) adapted to operatively connect the motor means (13) of said work vehicle (10) to the locomotion means (12) of said work vehicle (10);
- an oil sump (3) adapted to collect an oil (60) lubricating, in use, said driveline (2);
- at least a pump (80, 52) adapted to suck said oil (60) from said oil sump (3) and arranged within said oil sump (3);
- an oil reservoir (4) adapted to contain said oil (60);
wherein said oil reservoir (4) is fluidly connected to said oil sump (3) and arranged at least in part below said oil sump (3) according to a direction (V) orthogonal to the ground on which said locomotion means (12), in use, rest;
**characterized in that** said work vehicle (10) further comprising:
- at least one implement (50), which is hydraulically operated, in use;
- an actuation circuit (51) for the actuation of said implement (50);
said actuation circuit (51) comprising:
- a second pump (52) adapted to suck said oil (60) from said oil sump (3);
- a remote valve (20) fluidly connected to said second pump (52) and said implement (50);
- a second duct (7) fluidly connecting said remote valve (20) to said driveline assembly (1);
said second pump (52) being adapted to deliver, in use, said oil sucked from said oil sump (3) to said remote valve (20);
wherein said second duct (7) comprises:
- a first stretch (21) extending from said remote valve (20);
- a second stretch (22) fluidly connecting said first stretch (21) to said oil sump (3); and
- a third stretch (23) fluidly connecting said first stretch (21) to said oil reservoir (4);
said work vehicle (10) comprises valve means adapted to control the flow of oil between said first stretch (21) and said oil sump (3) and/or between said first stretch (21) and said oil reservoir (4).

2. Work vehicle (10) according to claim 1, comprising a container (5) enclosing at least in part said driveline (2);
said container (5) enclosing said oil sump (3) or defined at least in part by said oil sump (3);
wherein said oil reservoir (4) is arranged externally to said container (5).

3. Work vehicle (10) according to claim 1 or 2, comprising a first duct (6) fluidly connecting said oil sump (3) to said oil reservoir (4).

4. Work vehicle (10) according to any one of the foregoing claims, wherein said oil reservoir (4) comprises a vent (9).

5. Work vehicle (10) according to any one of the foregoing claims, comprising a first said pump (80) adapted to suck said oil (60) from said oil sump (3) to lubricate said driveline (2).

6. Work vehicle according to any one of the foregoing claims, wherein said valve means are adapted to control the flow of oil such that the flow rate of said oil flowing, in use, between said first stretch (21) and said oil reservoir (4) is greater than the flow rate of said oil flowing, in use, between said first stretch (21) and said oil sump (3).

7. Work vehicle according to any one of the foregoing claims, wherein said valve means comprise a hydraulically actuated valve or an electro-hydraulically actuated valve.

8. Work vehicle according to any one of the foregoing claims, when depending on claim 3, wherein the extension of the cross section of said first duct (6) is greater than the extension of the cross section of said second duct (7).

9. Work vehicle according to any one of the foregoing claims, wherein said actuation circuit (51) comprises deaeration means (53).

10. Work vehicle according to claims 8 and 9, wherein deaeration means (53) comprise a deaerator (54, 55) at said second stretch (22) and/or at said third stretch (23).

11. Work vehicle according to any one of the foregoing claims, defining a longitudinal direction (X), a front portion (10a) and a rear portion (10b) according to said longitudinal direction (X);
said oil reservoir (4) being at least partially interposed between said oil sump (3) and said front portion (10a).

## Patentansprüche

1. Arbeitsfahrzeug (10) mit:
- einem Hauptkörper (11);
- Fortbewegungsmitteln (12), die dazu eingerichtet sind, den Hauptkörper (11) relativ zu einem Bezugssystem zu bewegen;
- Motormitteln (13), die dazu eingerichtet sind, die Fortbewegungsmittel (12) anzutreiben;
- einer Antriebsstranganordnung (1),
wobei die Antriebsstranganordnung (1) aufweist:
- einen Antriebsstrang (2), der dazu eingerichtet ist, die Motormittel (13) des Arbeitsfahrzeugs (10) betriebsbereit mit den Fortbewegungsmitteln (12) des Arbeitsfahrzeugs (10) zu verbinden;
- eine Ölwanne (3), die dazu eingerichtet ist, ein Öl (60) aufzunehmen, das während des Betriebs den Antriebsstrang (2) schmiert;
- mindestens eine Pumpe (80, 52), die dazu eingerichtet ist, das Öl (60) aus der Ölwanne (3) anzusaugen, und innerhalb der Ölwanne (3) angeordnet ist;
- einen Ölvorratsbehälter (4), der dazu eingerichtet ist, das Öl (60) aufzunehmen;
wobei der Ölvorratsbehälter (4) fluidisch mit der Ölwanne (3) verbunden ist und zumindest teilweise unterhalb der Ölwanne (3) gemäß einer Richtung (V) angeordnet ist, die senkrecht zum Boden verläuft, auf dem die Fortbewegungsmittel (12) im Betrieb aufliegen;
**dadurch gekennzeichnet, dass**
das Arbeitsfahrzeug (10) des Weiteren aufweist:
- mindestens ein Arbeitsgerät (50), das im Betrieb hydraulisch betätigt wird;
- einen Betätigungskreis (51) zur Betätigung des Arbeitsgeräts (50);
wobei der Betätigungskreis (51) aufweist:
- eine zweite Pumpe (52), die dazu eingerichtet ist, das Öl (60) aus der Ölwanne (3) anzusaugen;
- ein Fernsteuerventil (20), das fluidisch mit der zweiten Pumpe (52) und dem Arbeitsgerät (50) verbunden ist;
- eine zweite Leitung (7), die das Fernsteuerventil (20) fluidisch mit der Antriebsstranganordnung (1) verbindet;
wobei die zweite Pumpe (52) dazu eingerichtet ist, das aus der Ölwanne (3) angesaugte Öl im Betrieb dem Fernsteuerventil (20) zuzuführen;
wobei die zweite Leitung (7) aufweist:
- einen ersten Abschnitt (21), der sich vom Fernsteuerventil (20) erstreckt;
- einen zweiten Abschnitt (22), der den ersten Abschnitt (21) fluidisch mit der Ölwanne (3) verbindet;
- einen dritten Abschnitt (23), der den ersten Abschnitt (21) fluidisch mit dem Ölvorratsbehälter (4) verbindet;
wobei das Arbeitsfahrzeug (10) Ventilmittel aufweist, die dazu eingerichtet sind, den Ölfluss zwischen dem ersten Abschnitt (21) und der Ölwanne (3) und/oder zwischen dem ersten Abschnitt (21) und dem Ölvorratsbehälter (4) zu steuern.

2. Arbeitsfahrzeug (10) nach Anspruch 1, das ein Gehäuse (5) aufweist, das zumindest teilweise den Antriebsstrang (2) umschließt;
wobei das Gehäuse (5) die Ölwanne (3) umschließt oder zumindest teilweise durch die Ölwanne (3) gebildet ist;
wobei der Ölvorratsbehälter (4) außerhalb des Gehäuses (5) angeordnet ist.

3. Arbeitsfahrzeug (10) nach Anspruch 1 oder 2, das eine erste Leitung (6) aufweist, die die Ölwanne (3) fluidisch mit dem Ölvorratsbehälter (4) verbindet.

4. Arbeitsfahrzeug (10) nach einem der vorhergehenden Ansprüche, wobei der Ölvorratsbehälter (4) eine Entlüftung (9) aufweist.

5. Arbeitsfahrzeug (10) nach einem der vorhergehenden Ansprüche, das eine erste genannte Pumpe (80), die dazu eingerichtet ist, das Öl (60) aus der Ölwanne (3) anzusaugen, um den Antriebsstrang (2) zu schmieren.

6. Arbeitsfahrzeug nach einem der vorhergehenden Ansprüche, wobei die Ventilmittel dazu eingerichtet sind, den Ölfluss so zu steuern, dass die Durchflussrate des im Betrieb zwischen dem ersten Abschnitt (21) und dem Ölvorratsbehälter (4) fließenden Öls größer ist als die Durchflussrate des im Betrieb zwischen dem ersten Abschnitt (21) und der Ölwanne (3) fließenden Öls.

7. Arbeitsfahrzeug nach einem der vorhergehenden Ansprüche, wobei die Ventilmittel ein hydraulisch betätigtes Ventil oder ein elektrohydraulisch betätigtes Ventil umfassen.

8. Arbeitsfahrzeug nach einem der vorhergehenden Ansprüche, wenn abhängig von Anspruch 3, wobei die Querschnittsfläche der ersten Leitung (6) größer ist als die Querschnittsfläche der zweiten Leitung (7).

9. Arbeitsfahrzeug nach einem der vorhergehenden Ansprüche, wobei der Betätigungskreis (51) Entlüftungsmittel (53) umfasst.

10. Arbeitsfahrzeug nach den Ansprüchen 8 und 9, wobei die Entlüftungsmittel (53) einen Entlüfter (54, 55) an dem zweiten Abschnitt (22) und/oder an dem dritten Abschnitt (23) umfassen.

11. Arbeitsfahrzeug nach einem der vorhergehenden Ansprüche, das eine Längsrichtung (X), einen Vorderabschnitt (10a) und einen Rückabschnitt (10b) entlang der Längsrichtung (X) definiert;
wobei der Ölvorratsbehälter (4) zumindest teilweise zwischen der Ölwanne (3) und dem Vorderabschnitt (10a) angeordnet ist.

## Revendications

1. Véhicule de travail (10) comprenant :
- un corps principal (11) ;
- des moyens de déplacement (12) adaptés pour déplacer ledit corps principal (11) par rapport à un système de référence ;
- des moyens moteurs (13) adaptés pour entraîner lesdits moyens de déplacement (12) ; et
- un assemblage d'arbres de transmission (1)
ledit assemblage d'arbres de transmission (1) comprenant :
- une ligne d'arbres de transmission (2) adaptée pour raccorder fonctionnellement les moyens moteurs (13) dudit véhicule de travail (10) aux moyens de déplacement (12) dudit véhicule de travail (10) ;
- un carter d'huile (3) adapté pour recueillir une huile (60) lubrifiant, en utilisation, ladite ligne d'arbres de transmission (2) ;
- au moins une pompe (80, 52) adaptée pour aspirer ladite huile (60) dudit carter d'huile (3) et agencée à l'intérieur dudit carter d'huile (3) ;
- un réservoir d'huile (4) adapté pour contenir ladite huile (60) ;
dans lequel ledit réservoir d'huile (4) est raccordé fluidiquement audit carter d'huile (3) et agencé au moins en partie sous ledit carter d'huile (3) selon une direction (V) orthogonale par rapport au sol sur lequel reposent lesdits moyens de déplacement (12), en utilisation ;
**caractérisé en ce que**
ledit véhicule de travail (10) comprend en outre :
- au moins un outil (50) à commande hydraulique, en utilisation ;
- un circuit d'actionnement (51) pour l'actionnement dudit outil (50) ;
ledit circuit d'actionnement (51) comprenant :
- une seconde pompe (52) adaptée pour aspirer ladite huile (60) à partir dudit carter d'huile (3) ;
- une vanne à commande à distance (20) raccordée fluidiquement à ladite seconde pompe (52) et audit outil (50) ;
- un second conduit (7) raccordant fluidiquement ladite vanne à commande à distance (20) audit assemblage d'arbres de transmission (1) ;
ladite seconde pompe (52) étant adaptée pour fournir, en utilisation, ladite huile aspirée à partir dudit carter d'huile (3) à ladite vanne à commande à distance (20) ;
dans lequel ledit second conduit (7) comprend :
- un premier allongement (21) s'étendant à partir de ladite vanne à commande à distance (20)
- un deuxième allongement (22) raccordant fluidiquement ledit premier allongement (21) audit carter d'huile (3) ; et
- un troisième allongement (23) raccordant fluidiquement ledit premier allongement (21) audit réservoir d'huile (4) ;
ledit véhicule de travail (10) comprend des moyens de régulation adaptés pour contrôler l'écoulement d'huile entre ledit premier allongement (21) et ledit carter d'huile (3) et/ou entre ledit premier allongement (21) et ledit réservoir d'huile (4).

2. Véhicule de travail (10) selon la revendication 1, comprenant un conteneur (5) renfermant au moins en partie ladite ligne d'arbres de transmission (2) ;
ledit conteneur (5) renfermant ledit carter d'huile (3) ou étant défini au moins en partie par ledit carter d'huile (3) ;
dans lequel ledit réservoir d'huile (4) est agencé à l'extérieur dudit conteneur (5).

3. Véhicule de travail (10) selon la revendication 1 ou la revendication 2, comprenant un premier conduit (6) raccordant fluidiquement ledit carter d'huile (3) audit réservoir d'huile (4).

4. Véhicule de travail (10) selon l'une quelconque des revendications précédentes, dans lequel ledit réservoir d'huile (4) comprend un évent (9).

5. Véhicule de travail (10) selon l'une quelconque des revendications précédentes, comprenant un système de pompage (80) adapté pour aspirer ladite huile (60) à partir dudit carter d'huile (3) et la diriger, en utilisation, vers ladite ligne d'arbres de transmission (2) pour la lubrifier.

6. Véhicule de travail selon l'une quelconque des revendications précédentes, dans lequel lesdits moyens de régulation sont adaptés pour contrôler l'écoulement d'huile de sorte que le débit de ladite huile s'écoulant, en utilisation, entre ledit premier allongement (21) et ledit réservoir d'huile (4) est supérieur au débit de ladite huile s'écoulant, en utilisation, entre ledit premier allongement (21) et ledit carter d'huile (3).

7. Véhicule de travail selon l'une quelconque des revendications précédentes, dans lequel lesdits moyens de régulation comprennent une vanne à actionnement hydraulique ou une soupape à actionnement électrohydraulique.

8. Véhicule de travail selon l'une quelconque des revendications précédentes, lorsqu'elle dépend de la revendication 3, dans lequel l'extension de la section transversale dudit premier conduit (6) est supérieure à l'extension de la section transversale dudit second conduit (7).

9. Véhicule de travail selon l'une quelconque des revendications précédentes, dans lequel ledit circuit d'actionnement (51) comprend des moyens de désaération (53).

10. Véhicule de travail selon la revendication 8 et la revendication 9, dans lequel les moyens de désaération (53) comprennent un désaérateur (54, 55) au niveau dudit deuxième allongement (22) et/ou dudit troisième allongement (23).

11. Véhicule de travail selon l'une quelconque des revendications précédentes, définissant une direction longitudinale (X), une partie avant (10a) et une partie arrière (10b) selon ledit sens longitudinal (X) ;
ledit réservoir d'huile (4) étant au moins partiellement interposé entre ledit carter d'huile (3) et ladite partie avant (10a).
